# EUROPEAN PATENT SPECIFICATION

(11) **EP 0 557 909 B1**
(45) Date of publication and mention of the grant of the patent: **02.04.1997**
(21) Application number: 93102681.9
(22) Date of filing: 19.02.1993
(51) Int. Cl.: B60B 27/00

(54) **A wheel support unit, particularly for a driving wheel of a motor vehicle**
Radträgervorrichtung, insbesondere für Antriebsrad eines Kraftfahrzeuges
Elément de support de roue, en particulier pour roue motrice d'un véhicule à moteur

(30) Priority: 28.02.1992 IT TO920172
(43) Date of publication of application: 01.09.1993
(73) Proprietor: SKF INDUSTRIE S.P.A., I-10123 Torino (IT)
(72) Inventor: Bertetti, Paolo, I-10153 Torino (IT); Ducci, Domenico, I-10020 Marentino (IT)
(74) Representative: Plebani, Rinaldo

(56) References cited:
- DE-A- 2 329 554
- FR-A- 2 138 861
- FR-A- 2 311 668
- FR-A- 2 648 752

## Description

The present invention relates to a wheel support unit, particularly for a driving wheel for a motor vehicle of the type known from FR-A-2 138 861, which discloses the features of the preamble of claim 1.

It is known that wheel support units for the drive wheels of vehicles, particularly for motor vehicles with front-wheel drive, comprise essentially a rolling bearing for ensuring the connection between the hub and the axle and a constant velocity joint whose outer ring is bell shaped and which carries, usually integrally therewith, a splined shaft for transmitting torque; in an attempt to reduce the number of components in such wheel support units in order to simplify their assembly, to reduce their overall weight and to increase their reliability, rolling bearings of the so-called "third generation" are often used in which both the outer ring and the inner ring are provided, at opposite ends, with respective external flanges which enable them to be fixed respectively to the suspension strut and to the wheel; thus the bearing comes to act both as the axle and as the hub; in order to ensure sufficient load-bearing capacity with the smaller dimensions of the bearing, the inner ring must be formed in two pieces, or as half-rings which are mounted on the shaft of the constant velocity joint and are clamped axially in a pack against this, or the half rings are welded to each other, e.g. like in FR-A-2 138 861.

The solution described above has the disadvantage of requiring the presence of a splined coupling between the shaft of the constant velocity joint and the bearing, which involves complicated and expensive operations in order to ensure that the thickness (and hence the weight) of the elements concerned does not fall below certain limits. Also the solution known from DE-A-2 329 554 does not overcome these drawbacks, because though the inner ring of the bearing is made integral with the bell housing of the constant velocity joint, the slined coupling is simply transferred to this latter and the bell housing itself. In order to overcome this disadvantage, at least partially, wheel support units have been proposed in which at least one half-ring of the bearing is integrated with the constant velocity joint, for example, by forming at least one of the rolling tracks of the bearing on the outer element of the constant velocity joint by means of a mechanical working process. The practical application of this solution is, however, obstructed by the fact that the heat produced in the constant velocity joint in use (as a result of friction) is transmitted to the bearing and affects the play and causes superheating of the lubricating grease and of the seal assembly with the consequent premature deterioration of the bearing itself.

The object of the invention is to provide a wheel support unit which is free from the disadvantages described above, particularly in that it has a small weight and bulk and is cheap to produce by virtue of the absence of parts which are difficult to work and which at the same time ensures that the rolling bearing has a long working life.

On the basis of the present invention, there is provided a wheel support unit as claimed in Claim 1.

In order to provide a better understanding of the invention, a non-limitative description of one embodiment thereof will now be given with reference to the appended drawing, in which:
Figure 1 illustrates in radial section and in elevation the upper half of a wheel support unit formed in accordance with the invention, the lower part being symmetrical; and
Figure 2 illustrates schematically the assembly of the main components of the wheel support unit of Figure 1.

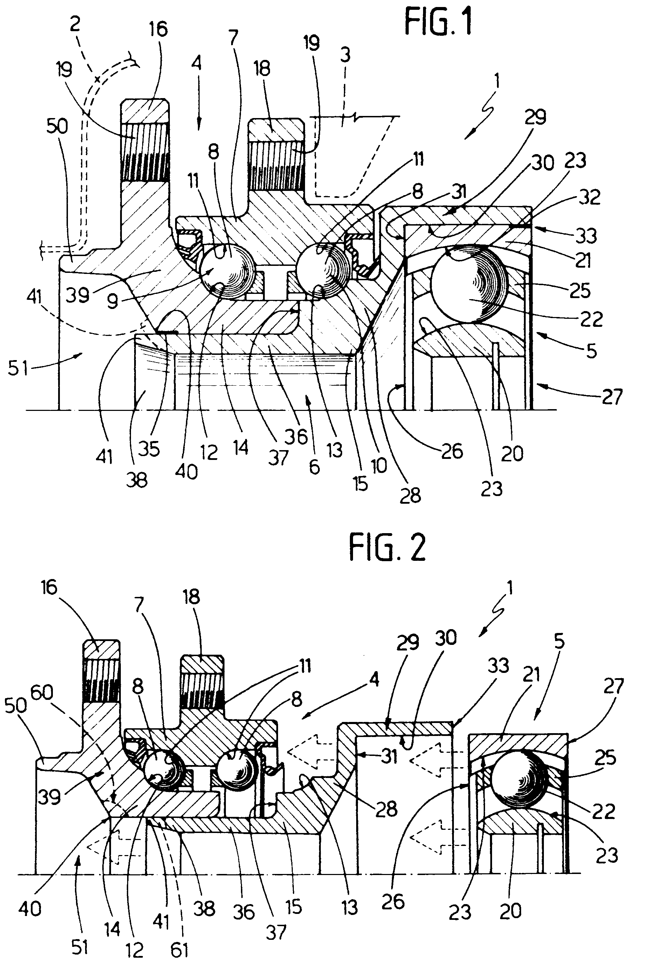

With reference to Figures 1 and 2, a wheel support unit for a vehicle (not illustrated) is generally indicated 1 and is adapted to enable the connection of a wheel 2, particularly a driving/steering wheel of a motor vehicle, to a suspension 3 (illustrated only schematically and in part) of the motor vehicle itself. The wheel support unit 1 includes a rolling bearing 4 and a constant velocity joint 5; the bearing 4 includes an inner ring 6 and an outer ring 7 concentric with each other and a plurality rolling bodies 8 interposed between the rings 6, 7 to render them relatively rotatable with low friction; in this particular case a plurality of balls is arranged in two rings 9 and 10 so as to engage respective annular tracks 11 formed on the inner peripheral surface of the outer ring 7 and respective opposing tracks 12, 13 formed on the outside of the inner ring 6; this latter is constituted by two half-rings 14, 15 which are sleeve-shaped and fitted co-axially one into the other while, in this case, an attachment flange 16 for the wheel 2 (and for its brake disc or drum, known and not illustrated for simplicity) is formed integrally with the half-ring 14. A flange 18 for attachment to the suspension 3 is formed integrally with the outer ring 7 from which it projects radially outwardly from the outer surface thereof in a half-way position between the tracks 11. The flanges 16, 18 are provided with a plurality of through-holes 19 in a ring for receiving screws or bolts for fixing the wheel 2 and the suspension 3 in known manner not illustrated for simplicity.

The constant velocity joint 5 is connected, as will be seen, so as to be fixed for rotation with the inner ring 6, in this particular case with the half-ring 15, so as to be able to transmit thereto the drive torque which it receives in known manner, not illustrated for simplicity, from the motor of the said vehicle; as is well known in the art, for this purpose the constant velocity joint 5 includes a first, radially-inner element 20 connectable for rotation, in known manner not illustrated to the vehicle transmission, for example, to an axle, a second, radially-outer element 21 connected for rotation with the half-ring 15 and a plurality of rolling bodies 22 interposed between the elements 20, 21 so as to engage respective tracks 23 which are specially shaped but well known to the expert in the art and are formed in the elements 21, 22; the balls are retained and guided by a cage 25. The drive torque is received by the element 20, transmitted in known manner through the tracks 23 and the balls 22 to the element 21 and from this is transferred to the half-ring 15 which transmits it, as will be seen, to the half-ring 14 which discharges it to the wheel 2 through the flange 16.

According to a first characteristic of the invention, the constant velocity joint 5 is formed as an independent unit in the form of a ring in that the two elements 20, 21 have an annular cylindrical shape such that the tracks 23 are open towards, and accessible from, both opposite end faces 26, 27 of the joint 5 itself. In combination with this characteristic, the half-ring 15 is formed integrally with a bell 29 for housing the constant velocity joint 5, which bell projects from a first end 28 of the half-ring 15 facing away from the half-ring 14; the bell 29 is shaped as an appendage of cylindrical cup shape and projects axially from the end 28 and has an outer diameter greater than that of the inner ring 6 and, in this particular case, substantially equal to the outer diameter of the outer ring 7 with which it is co-axial; internally this appendage or bell 29 defines a cylindrical seat 30 in which the outer annular element 21 of the constant velocity joint 5 is fitted with radial interference so that it bears against a cooperating axial shoulder 31 defined by the end wall of the seat 30; this assembly ensures, as already known per se, a rotational connection between the joint 5 and the bell 29; according to the invention, the joint 5 is also connected by a direct mechanical join, in this particular case by a bead weld 32 formed between the facing surfaces of the outer annular element 21 of the joint 5 and an inlet edge portion 33 of the seat 30, at the opposite end from the axial shoulder 31, made for example by laser welding which renders the element 21 fixed for rotation with the bell 29 and hence, through this, with the half-ring 15.

According to a further characteristic of the invention, the half-rings 14,15 are also coupled together with radial interference and are fixed together for rotation at the opposite end from the bell 29 by means of a second bead weld 35. More particularly, the half-ring 15 is provided with the external track 13 at its end 28 from which the bell 29 projects and includes a cylindrical sleeve portion 36 of smaller outer diameter than the outer diameter of the inner ring 6 in its entirety, projecting from a second axial shoulder 37 formed on the half-ring 15 close to the track 13 at its end opposite the bell 29, this sleeve portion defining at its free end a second end 38 of the half-ring 15 opposite the end 28; the half-ring 14 is fitted, with interference, onto the outside of the sleeve portion 36 so as to bear against the shoulder 37 and carries the flange 16 rigid therewith at its end 39 adjacent the end 38.

The bead weld 35 is formed between the facing surfaces of the cylindrical sleeve portion 36 of the half-ring 15 and a radially inner inlet edge portion 40 of the end 39 of the half-ring 14. The end 38 projects axially beyond the inlet edge portion 40 and beyond the bead weld 35 and is provided with axial security-clamping means for retaining the half-ring 14 clamped in a pack against the shoulder 37 even should the bead weld 35 break; in this particular case, an edge 41 of the end 38 is upset or turned radially outwardly, with plastic deformation, against the edge 40 so as to overlap the bead weld 35, in use, as illustrated in broken outline in Figure 1. The attachment flange 16 preferably has an axially projecting centering collar 50 for the wheel 2 which defines a space 51 in front of the edge portion 40 into which the end 38 projects.

In one possible variant, illustrated in broken outline in Figure 2, the end 38 may be provided not only with axial security-clamping means but also with torque-transmission means to avoid this being transferred entirely through the weld 35: in this particular case, the edge 40 has radial recesses or notches 6 formed in its end 39, in the space 51 and in correspondence with the flange 16; respective circumferential, semi-blanked portions 61 of the edge 41 are then upset by plastic deformation radially outwardly into these notches 60.

The assembly of the unit 1 is simple, quick and inexpensive and is carried out as illustrated in Figure 2: the joint 5 and the elements 7, 14, 15 are produced separately, at low cost because of the absence of expensive working, such as, for example, the formation of splined couplings; then, the joint 5 is fitted into its seat 30 and the weld 32 is formed. Finally the outer ring 7 is mounted on the half-ring 14 (or, equally well, on the half-ring 15) and the half-rings 14, 15 are connected together; the weld 35 is then made and finally the edge 41 (or only its portions 61) are upset, for example with the use of a suitable tool. Thus the connection between the joint 5 and the half-ring 15 is ensured by the weld 32 which, in any case, is sufficiently far from the track 13 to avoid danger of deformation thereof, which dangers are entirely absent when a low heat-dispersion welding method is used, such as laser welding or electron beam welding. The transmission of torque between the two half-rings is ensured by the weld 35 with regard to which, in relation to the track 12, the same statement as that made above for the weld 32 is true; it should be noted that, by virtue of the conformation of the half-rings 14, 15 described, the weld 35 is also located in an optimum position from the point of view of the applied loads: in fact, it being formed at the end of the sleeve appendage 36, which is rather long and thin (through the entire length of the half-ring 14), it receives the stresses due to the torque transmission damped by the resilience of the appendage 36 itself which behaves as a torsion bar. In any case the engagement of the bent portions 61, if present, with the notches 60 creates a further torque transmission means which further relieves the weld 35.

A further advantage of the unit 1 according to the invention lies in the poor heat transmission between the joint 5 and the bearing 4 in use: in fact, the joint 5-bell 29-half-ring 15 complex, once the weld 32 is made, behaves as a known constant velocity joint-half-ring unit but with the advantage that, since both of the faces 26, 27 of the joint 5 are open before assembly and fixing, the tracks 23 may be worked from both the faces 26, 27 with alternately inverted curvature according to a known technique impossible to imply to normal constant velocity joints because of the fact that the tracks are accessible only on one face and not two due to the presence of the half-ring formed integrally with the bearing. This particular working enables the friction between the tracks 23 and the cage 25 to be reduced and consequently reduces drastically the heat produced by the joint 5 and, hence, its transmission to the bearing 4.

Finally should the weld 32 or the weld 35 break, the sole consequence is the stoppage (or considerable reduction in) of the torque transmission to the wheel 2 which is readily noticed by the driver of the vehicle who may provide for its repair: in any case there is no risk of the release of the coupling between the two half-rings 14, 15 and hence of the wheel 2 losing speed as is, on the other hand, possible with certain models of wheel units in use today.

## Claims

1. A wheel support unit (1) comprising a rolling bearing (4) including, in turn, first (6) and second (7) concentric rings and a plurality of rolling bodies (8) interposed between the rings (6,7) to render them relatively rotatable with low friction, said first and second ring having, respectively, a first attachment flange (16) for a wheel and a second attachment flange (18) for a suspension of a vehicle, the first ring (6) being constituted by first (14) and second (15) sleeve-shaped half-rings, which are fitted coaxially one on the other, the first and second half-rings (14,15) being coupled together with radial interference and being connected for rotation together at a first axial end (38) of the second half ring (15) by means of a first bead weld (35), the first half ring (14) being fixed firmly to the wheel attachment flange (16);
characterised in that
- the second half ring (15) is fixed firmly to a constant velocity joint (5);
- the constant velocity joint (5) is formed as an independent unit constituted by two annular elements, a radially inner one (20) and a radially outer one (21) respectively, mounted concentrically with the interposition of rolling bodies (22);
- the second half-ring (15) is formed integrally with a bell housing (29) for the constant velocity joint (5) which projects from a second axial end (28) thereof, at the opposite to said first axial end (38), the bell housing (29) having a seat (30) in which the radially outer annular element (21) of the constant velocity joint (5) is fitted with radial interference so as to bear against a respective axial shoulder (31) of the seat (30);
- the constant velocity joint (5) is fixed for rotation with the bell (29) by means of the said radial interference and a second bead weld (32) formed between the facing surfaces of the radially outer annular element (21) of the joint (5) and an inlet edge (33) of the seat (30) at the opposite end from the axial shoulder (31) of the seat (30).

2. A wheel support unit (1) according to Claim 1, characterised in that the first and second half-rings (14,15) define an inner ring (6) of the bearing (4), the second half-ring (15) having, at the said second end (28) from which the bell housing (29) of the joint projects, a first external rolling track (13) for a first ring (10) of rolling bodies of the bearing (4), and including a cylindrical sleeve portion (36) having an outer diameter less than the outer diameter of the inner ring (6), which projects from a second axial shoulder (37) at the opposite end from the bell (29) and formed on the second half-ring (15) close to the first track (13), and defining at its own free end, said second end (38) of the second half-ring opposite the said first end; the first half-ring (14) being fitted externally, with interference, onto the cylindrical sleeve portion (36) so as to abut the second axial shoulder (37) and being provided externally, at its end adjacent the second end (38) of the second half-ring (15), with the wheel attachment flange (16); the first bead weld (35) being formed between facing surfaces of the said cylindrical sleeve portion (36) of the second half-ring (15) and a radially inner edge portion (40) at the said end of the first half-ring (14) provided with the said flange (16).

3. A wheel support unit (1) according to Claim 2, characterised in that the second end (38) of the second half-ring (15) projects axially beyond the radially inner edge portion (40) of the first half-ring (14) and beyond the first bead weld (35) and is provided with axial security-clamping means (41) for the first half-ring adapted to keep it clamped in a pack against the second shoulder (37).

4. A wheel support unit (1) according to Claim 3, characterised in that the axial security-clamping means are defined by an edge (41) of the second end (38) of the second half-ring (15) which is upset radially outwardly by plastic deformation against the inlet edge of the first half-ring (14) so as to be superposed on the first bead weld (35).

5. A wheel support unit (1) according to Claim 3, characterised in that the axial security-clamping means are defined by respective semi-blanked circumferential portions (61) of an edge (41) of the second end of the second half-ring (15) upset radially outwardly by plastic deformation so as to engage respective radial notches (60) formed in the facing inlet edge of the first half-ring (14) to define therewith further transmission means for transmitting torque between the half-rings (14,15).

6. A wheel support unit (1) according to any one of Claims 3 to 5, characterised in that the attachment flange (16) of the first half-ring (14) has an axially projecting centering element (50) for the wheel which defines a space in front of the said inlet edge of the first half-ring (14) into which the second end (38) of the second half-ring (15) projects.

## Patentansprüche

1. Radlagereinheit (1) mit einem Wälzlager (4) mit einem ersten Ring (6), einem zu diesem konzentrischen zweiten Ring (7) und einer Vielzahl von Wälzkörpern (8), die zwischen den Ringen (6, 7) eingesetzt sind, um sie relativ zueinander mit geringer Reibung drehbar zu machen, wobei der erste und der zweite Ring einen ersten Befestigungsflansch (16) für ein Rad bzw. einen zweiten Befestigungsflansch (18) für eine Aufhängung an einem Fahrzeug haben und der erste Ring (6) aus einem ersten (14) und einem zweiten (15) buchsenförmigen Halbring zusammengesetzt ist, die koaxial aufeinander sitzen, mit radialem Preßsitz gekoppelt sind und an einem ersten axialen Ende (38) des zweiten Halbrings (15) durch eine erste Schweißnaht (35) drehfest verbunden sind, und von denen der erste Halbring (14) fest mit dem Radbefestigungsflansch (16) verbunden ist, **dadurch gekennzeichnet**, daß
- der zweite Halbring (15) mit einem homokinetischen Gelenk (5) fest verbunden ist;
- das homokinetische Gelenk (5) als eine unabhängige Einheit ausgebildet ist, die aus zwei ringförmigen Elementen besteht, nämlich einem radial inneren (20) und einem radial äußeren (21), die konzentrisch mit dazwischen eingesetzten Rollkörpern (22) montiert sind;
- der zweite Halbring (15) einstückig mit einem von seinem dem ersten axialen Ende (38) entgegengesetzten, zweiten axialen Ende vorspringenden, glockenförmigen Gehäuse (29) für das homokinetische Gelenk (5) ausgebildet ist, wobei das glockenförmige Gehäuse (29) einen Sitz (30) hat, in den das radial äußere ringförmige Element (21) des homokinetischen Gelenks (5) mit radialem Preßsitz so eingepaßt ist, daß es an einer entsprechenden axialen Schulter (31) des Sitzes (30) anliegt;
- das homokinetische Gelenk (5) mit dem glockenförmigen Gehäuse (29) drehfest verbunden ist durch den Preßsitz und eine zweite Schweißnaht (32) zwischen den gegenüberliegenden Flächen des radial äußeren ringförmigen Elements (21) des Gelenks (5) und einer Einlaßkante (33) des Sitzes (30) an dem der axialen Schulter (31) des Sitzes (30) entgegengesetzten Ende.

2. Radlagereinheit (1) nach Anspruch 1, **dadurch gekennzeichnet**, daß der erste und der zweite Halbring (14, 15) einen Innenring (6) des Lagers (4) bilden, der zweite Halbring (15) an dem zweiten Ende (28), von dem das glockenförmige Gehäuse (29) des Gelenks vorspringt, eine erste äußere Laufbahn (13) für eine erste Ringreihe (10) von Rollkörpern des Lagers (4) hat und einen zylindrischen, buchsenförmigen Teil (36) aufweist, dessen Außendurchmesser kleiner ist als der Außendurchmesser des Innenrings (6) und der von einer zweiten axialen Schulter (37), die an dem dem glockenförmigen Gehäuse (29) entgegengesetzten Ende und am Zweiten Halbring (15) neben der ersten Laufbahn (13) ausgebildet ist, vorspringt und an seinem eigenen freien Ende das zweite, dem ersten Ende entgegengesetzte Ende (38) des zweiten Halbrings bildet, daß der erste Halbring (14) außen mit Preßsitz so auf den zylindrischen, buchsenförmigen Teil (36) aufgepaßt ist, daß er an der zweiten axialen Schulter (37) anliegt, und an seinem dem zweiten Ende (38) des zweiten Halbrings (15) benachbarten Ende außen mit dem Radbefestigungsflansch (16) versehen ist, und daß die erste Schweißnaht (35) zwischen gegenüberliegenden Flächen des zylindrischen, buchsenförmigen Teils (36) des zweiten Halbrings (15) und einem radial inneren Randbereich (40) an dem mit dem Flansch (16) versehenen Ende des ersten Halbrings (14) ausgebildet ist.

3. Radlagereinheit (1) nach Anspruch 2, **dadurch gekennzeichnet**, daß das zweite Ende (38) des zweiten Halbrings (15) axial über den radial inneren Randbereich (40) des ersten Halbrings (14) und über die erste Schweißnaht (35) vorsteht und mit axialen Sicherheits-Klemmmitteln (41) für den ersten Halbring versehen ist, um ihn geklemmt in Anlage an der zweiten Schulter (37) zu halten.

4. Radlagereinheit (1) nach Anspruch 3, **dadurch gekennzeichnet**, daß die axialen Sicherheits-Klemmmittel durch eine Kante (41) des zweiten Endes (38) des zweiten Halbrings (15) gebildet sind, die durch plastische Verformung radial nach außen gegen die Einlaßkante des ersten Halbrings (14) gepreßt ist, so daß sie die erste Schweißnaht (35) überlagert.

5. Radlagereinheit (1) nach Anspruch 3, **dadurch gekennzeichnet**, daß die axialen Sicherheits-Klemmmittel durch zungenförmig freigelegte Umfangsbereiche (61) einer Kante (41) des zweiten Endes des zweiten Halbrings (15) gebildet sind, die durch plastische Verformung radial nach außen gepreßt sind, so daß sie in entsprechende, in der gegenüberliegenden Einlaßkante des ersten Halbrings (14) eingeformte, radiale Vertiefungen (60) eingreifen, um zusammen mit diesen weitere Übertragungsmittel zur Drehmomentübertragung zwischen den Halbringen (14, 15) zu bilden.

6. Radlagereinheit (1) nach einem der Ansprüche 3 bis 5, **dadurch gekennzeichnet**, daß der Befestigungsflansch (16) des ersten Halbrings (14) einen axial vorspringenden Zentrierteil (50) für das Rad hat, der einen Raum vor der Einlaßkante des ersten Halbrings (14) begrenzt, in den das zweite Ende (38) des zweiten Halbrings (15) ragt.

## Revendications

1. Ensemble (1) de support de roue comprenant un palier de roulement (4) qui comprend lui-même une première bague (6) et une deuxième bague (7) concentriques et une pluralité de corps roulants (8) intercalés entre les bagues (6, 7) pour leur permettre de tourner l'une par rapport à l'autre avec peu de frottements, lesdites première et deuxième bagues comportant respectivement une première bride de fixation (16) destinée à la roue et une deuxième bride de fixation (18) destinée à la suspension du véhicule, la première bague (6) étant faite d'une première moitié de bague (14) et d'une deuxième moitié de bague (15) en forme de manchons qui ont été emboîtées coaxialement l'une sur l'autre, les première et deuxième moitiés de bague (14, 15) étant couplées ensemble par interférence radiale et étant couplées, en vue de tourner ensemble, au niveau d'une première extrémité axiale (38) de la deuxième moitié de bague (15) au moyen d'une première soudure (35), la première moitié de bague (14) étant fermement fixée à la bride (16) de fixation de la roue,
caractérisé en ce que :
- la deuxième moitié de bague (15) est fermement fixée à un joint à double cardan (5),
- le joint à double cardan (5) est formé comme une unité indépendante constituée par deux éléments annulaires, respectivement un élément radialement intérieur (20) et un élément radialement extérieur (21), montés concentriquement avec interposition de corps roulants (22),
- la deuxième moitié de bague (15) est formée en une seule pièce avec un carter en cloche (29), destiné au joint à double cardan (5), qui dépasse de sa deuxième extrémité axiale (28), à l'opposé de ladite première extrémité axiale (38), le carter en cloche (29) comportant un siège (30) dans lequel l'élément annulaire radialement extérieur (21) du joint à double cardan (5) est emboîté avec interférence radiale de manière à porter contre un épaulement axial correspondant (31) du siège (30),
- le joint à double cardan (5) est fixé pour tourner avec la cloche (29) grâce à ladite interférence radiale et à une deuxième soudure (32) formée entre les surfaces en vis-à-vis de l'élément annulaire radialement extérieur (21) du joint (5) et un bord d'entrée (33) du siège (30) situé au niveau de l'extrémité opposée à l'épaulement axial (31) du siège (30).

2. Ensemble (1) de support de roue selon la revendication 1, caractérisé en ce que les première et deuxième moitiés de bague (14, 15) définissent une bague intérieure (6) du palier (4), la deuxième moitié de bague (15) comportant, au niveau de ladite deuxième extrémité (28) dont dépasse le carter en cloche (29) du joint (5), une première piste extérieure de roulement (13) destinée à une première couronne (10) de corps roulants du palier (4) et comportant une partie de manchon cylindrique (36) avec un diamètre extérieur inférieur au diamètre extérieur de la bague intérieure (6), qui dépasse d'un deuxième épaulement axial (37) situé en l'extrémité opposée à la cloche (29) et formé sur la deuxième moitié de bague (15) près de la première piste (13), et définissant en sa propre extrémité libre ladite deuxième extrémité (38) de la deuxième moitié de bague opposée à ladite première extrémité, la première moitié de bague (14) étant emboîtée extérieurement, avec interférence, sur la partie de manchon cylindrique (36) de manière à porter contre le deuxième épaulement axial (37) et comportant sur l'extérieur, en son extrémité adjacente à la deuxième extrémité (38) de la deuxième moitié de bague (15), la bride (16) de fixation de roue, la première soudure (35) étant formée entre des surfaces en vis-à-vis de ladite partie de manchon cylindrique (36) de la deuxième moitié de bague (15) et une partie (40) formant bord radialement intérieur située en ladite extrémité de la première moitié de bague (14) qui est dotée de ladite bride (16).

3. Ensemble (1) de support de roue selon la revendication 2, caractérisé en ce que la deuxième extrémité (38) de la deuxième moitié de bague (15) dépasse axialement au-delà de la partie formant bord radialement intérieur (40) de la première moitié de bague (14) et au-delà de la première soudure (35) et comporte un moyen axial (41) de fixation de sécurité destiné à maintenir la première moitié de bague serrée contre le deuxième épaulement (37).

4. Ensemble (1) de support de roue selon la revendication 3, caractérisé en ce que le moyen axial (41) de fixation de sécurité est défini par un bord (41) de la deuxième extrémité (38) de la deuxième moitié de bague (15) qui est maté radialement vers l'extérieur par déformation plastique, contre le bord d'entrée de la première moitié de bague (14) afin d'être en superposition sur la première soudure (35).

5. Ensemble (1) de support de roue selon la revendication 3, caractérisé en ce que le moyen axial (41) de fixation de sécurité est défini par des parties circonférentielles respectives (61) semi-découpées du bord (41) de la deuxième extrémité de la deuxième moitié de bague (15), matées radialement vers l'extérieur par déformation plastique afin de se mettre en prise avec des encoches radiales correspondantes (60) formées dans le bord d'entrée situé en face de la première moitié de bague (14) pour définir avec lui un autre moyen de transmission du couple entre les moitiés de bague (14, 15).

6. Ensemble (1) de support de roue selon l'une quelconque des revendications 3 à 5, caractérisé en ce que la bride de fixation (16) de la première moitié de bague (14) comporte un élément (50) de centrage de la roue, faisant saillie axialement, qui définit un espace devant ledit bord d'entrée de la première moitié de bague (14) dans lequel fait saillie la deuxième extrémité (38) de la deuxième moitié de bague (15).
